Europäisches Patentamt

European Patent Office

Office européen des brevets

(19)

(11) EP 0 738 680 A2

(12) EUROPÄISCHE PATENTANMELDUNG

(43) Veröffentlichungstag:
23.10.1996 Patentblatt 1996/43

(51) Int. Cl.⁶: B65H 5/00

(21) Anmeldenummer: 96104410.4

(22) Anmeldetag: 20.03.1996

(84) Benannte Vertragsstaaten:
DE ES FR GB NL

(30) Priorität: 20.04.1995 US 425273

(71) Anmelder: Heidelberger Druckmaschinen
Aktiengesellschaft
D-69115 Heidelberg (DE)

(72) Erfinder:
• Kühnle, Manfred R., Dr.
New London, NH 03257 (US)
• Cormier, Steven O.
Leominster, Massachusetts (US)

(74) Vertreter: Stoltenberg, Heinz-Herbert Baldo et al
c/o Heidelberger Druckmaschinen AG
Kurfürsten-Anlage 52-60
69115 Heidelberg (DE)

(54) Digitales Präzisionspositioniersystem

(57) Diese Erfindung betrifft ein digitales Präzisionspositioniersystem und im besonderen ein Transportsystem mit einer Einrichtung zum elektrostatischen Niederhalten eines Substrats auf einem beweglichen, bandförmigen Träger. Dieses System findet Verwendung in Druckmaschinen und anderen, ein genaues Positionieren erfordernden Vorrichtungen.

FIG. 1

## Beschreibung

Diese Erfindung betrifft ein digitales Präzisionspositioniersystem und im besonderen ein Transportsystem mit einer Einrichtung zum elektrostatischen Niederhalten eines Substrats zur Verwendung in Druckmaschinen und anderen, ein genaues Positionieren erfordernden Vorrichtungen.

In der Maschinenwelt gibt es verschiedene Transportsysteme, die Substrate oder Gegenstände von einer Station zur anderen tragen müssen, um eine Reihe von Arbeitsvorgängen darauf auszuführen. Zum Beispiel wird beim deckungsgleichen Mehrfarbendruck (CAP) ein Papiersubstrat von einer ortsfesten Druckstation zur nächsten bewegt, um die Farben nacheinander auf das Papier aufzubringen, und zwar so, daß die bildformenden Farbpunkte an jeder weiteren Druckstation einander passergenau überlagern. Es ist Passergenauigkeit erforderlich, da die verschiedenen Farben, die übereinander lagern, kollektiv als mehrfache Filter wirken, die durch diese Überlagerung eine große Anzahl von Farbtönen erzeugen können. Es wäre wünschenswert, für einen gedruckten Punkt von 50 um$^2$ eine Passergenauigkeit mit einer Toleranz von ca. ± 5 um zu erhalten.

Das Drucken ist nicht der einzige Bereich, in welchem der präzise Transport von Gegenständen zu aufeinanderfolgenden Arbeitsstationen von Belang ist. Zum Beispiel müssen bei Herstellungsprozessen mit integriertem Schaltkreis Halbleiter-Trägerblättchen sehr präzise zu aufeinanderfolgenden ortsfesten Belichtungs- , Abdeck , Ätz- und Kontaktrahmen-Anbringstationen transportiert werden, um ein Fertigprodukt zu erzeugen. Jede Mißpositionierung der Trägerblättchen bezüglich der Arbeitsstation ergibt Abfall, der für den Hersteller ziemlich teuer werden kann.

Je nach Anwendung, z. B. für das Drucken, Abdekken, usw., kann der Substratträger ein Band oder ein Zylinder sein. Der Träger kann sogar ein sogenannter Schwingförderer mit bewegenlichem Boden sein, wobei ein Trägerteil sich relativ zu einem stationären Teil mit letzterem hin und herbewegt, um ein rückwärtiges Abrutschen des transportierten Gegenstandes während der Zurückbewegung des beweglichen Teils zu verhindern.

Bisher wurde dem Erfordernis, Substrate und andere Gegenstände akkurat zu transportieren und positionieren, dadurch entsprochen, daß teuere und umständliche Präzisionsfixiermechanismen, die normalerweise aus mechanischen Greifern oder Saugluthaltern bestehen, angewandt wurden, um das Zurückhalten des Substrats oder anderer Gegenstände auf seinem jeweiligen Träger zu gewährleisten. Trägervorrichtungen, wie die in der Druckindustrie verwendeten Papierzylinder, sind nicht nur wegen ihrer kunstvoll ausgeführten inneren Greifermechanismen kompliziert und kostspielig, sondern sie begrenzen auch die Geschwindigkeit des Systems, da die mechanischen Greifer mit ihren Betätigern und Exzentern der Zykluszeit ernsthafte Beschränkungen auferlegen. Ein weiterer Nachteil dieser herkömmlichen Vorrichtungen ist deren Neigung, die von diesen ergriffenen oder geklemmten Substrate oder anderen Gegenstände zu beschädigen. Außerdem sind sowohl mechanisch betätigte Zurückhaltemechanismen als auch saugluftbetätigte Vorrichtungen ziemlich geräuschvoll, so daß sie in der Umgebung der Maschinen arbeitendes Personal stören können.

Außer der Einrichtung zum Halten des Papiers oder eines anderen Gegenstandes auf seinem Träger umfaßt die herkömmliche Vorrichtung auch immer einen Abtast- oder Ortungsmechanismus zum Steuern der Position des sich bewegenden Trägers relativ zur ortsfesten Arbeitsstation. Bei einem bandförmigen Träger wird gewöhnlich die Querlage des Bandes relativ zu einer Sollposition abgetastet und das Band unter Verwendung eines Servomechanismus in Richtung der Sollposition gesteuert, jedoch all dies macht das ganze System noch komplizierter.

Aufgrund der hohen Passergenauigkeit, die beim Positionieren im Mehrfarbendruck erforderlich ist, werden solche bandförmigen Förderer für den Transport des Papiers oder anderer Drucksubstrate von einer Druckstation zur anderen normalerweise nicht verwendet, da die Bänder immer noch die Neigung haben, sich trotz des vorhandenen, oben genannten Bandpositionier-Servomechanismus lateral zu verschieben. Deshalb ist es wünschenswert, ein Bandtransportsystem zu schaffen, womit eine hohe Passergenauigkeit beim Positionieren an Druck- oder anderen, von dem Transport bedienten Arbeitsstationen erzielt werden kann.

Es besteht auch ein Bedürfnis, eine Vielfalt von Substraten, wie Papier- und Kunststoffbögen, dünne Folien und andere, gewöhnlich flache Medien mit einem minimalen Aufwand an Energie und mit wesentlich höheren Betriebsgeschwindigkeiten als den derzeit erreichbaren sicher und zuverlässig transportieren und positionieren zu können.

Es ist deshalb eine Aufgabe der Erfindung, ein digitales Präzisionspositioniersystem zu schaffen, welches es ermöglicht, Arbeit an einem Gegenstand an einer Arbeitsstation sehr präzise ausführen zu können.

Es ist eine weitere Aufgabe der Erfindung, ein verbessertes System für das Transportieren eines Substrats oder anderen flachen Gegenstandes an eine Arbeitsstation ein verbessertes System zu schaffen, wobei akkurates Positionieren mit großer Passergenauigkeit erzielt ist.

Es ist eine weitere Aufgabe der Erfindung, ein Positioniersystem für das Zurückhalten des Substrats auf dem Substratträger des Systems mit nicht-mechanischen Mitteln vorzusehen.

Es ist eine weitere Aufgabe der Erfindung, ein System vorzusehen, bei dem eine Vielzahl unterschiedlicher Gegenstände, einschließlich dünner und fragiler Substrate, sicher und zuverlässig transportiert werden können.

Es ist eine zusätzliche Aufgabe der Erfindung, ein Positioniersystem zu schaffen, das besonders auf den Mehrfarbendruck anwendbar ist.

Es ist eine weitere Aufgabe der Erfindung, ein Präzisionspositioniersystem zu schaffen, das geräuscharm und effizient ist, indem es ein Minimum an Energie verbraucht.

Es ist eine weitere Aufgabe der Erfindung, ein System mit einem bandförmigen Träger vorzusehen, wobei der Träger relativ zu seiner Antriebswalze nicht schlupft.

Es ist noch eine weitere Aufgabe der Erfindung, ein digitales Positioniersystem zu schaffen, welches mit Hilfe eines angetriebenen Trägerbandes Gegenstände zu aufeinanderfolgenden Arbeitsstationen transportieren kann, wobei passergenaues Positionieren an den Arbeitsstationen erzielt ist.

Andere Aufgaben werden zum Teil offensichtlich sein und zum Teil im folgenden beschrieben werden.

Demgemäß umfaßt die Erfindung die Merkmale der Konstruktion, der Kombination von Elementen und der Anordnung von Teilen, was in der folgenden ausführlichen Beschreibung beispielsweise dargelegt wird, und der Geltungsbereich der Erfindung ist in den Ansprüchen angegeben.

In Kürze, das Positioniersystem gemäß vorliegender Erfindung umfaßt einen beweglichen Träger zum Transportieren eines Substrats oder anderen Gegenstandes zu einer oder mehreren Arbeitsstationen, an welchen verschiedene Arbeiten in ausgewählten Positionen auf dem Substrat ausgeführt werden. Es wird hier im besonderen solch ein System beschrieben, das in eine Druckmaschine zum Drucken in mehreren Farben auf ein Drucksubstrat, z.B. auf durch die Druckmaschine transportiertes Papier, integriert ist. Es sollte jedoch verstanden sein, daß manche Aspekte des Systems auch für andere Anwendungen, die akkurates Positionieren eines Substrats oder anderen flachen Gegenstandes erfordert, eingesetzt werden können. Es wird hier hauptsächlich ein Positioniersystem mit einem bandförmigen Substratträger beschrieben. Jedoch können auch manche Merkmale der Erfindung auf Transporte mit trommelförmigen Trägern oder hin- und herbeweglichen Trägern (Schwingförderer) angewandt werden.

Der bandförmige Träger in der Form einer flexiblen Bandschlaufe wird zwischen einem Paar Walzen gespannt, wobei mindestens eine der Walzen durch einen geeigneten Motorantrieb rotiert wird. Der obere Abschnitt der Bandschlaufe bewegt sich durch mehrere Arbeitsstationen. Bei einer Druckmaschine bestehen die Arbeitsstationen aus einer Reihe von Druckstationen, die angeordnet sind, um Druck in unterschiedlichen Farben in der Form von Farbpunkten auf ein Substrat, e.g. auf von dem Träger getragene Papierbögen, aufzubringen.

Um das Substrat in seiner Position relativ zu dem Träger zu halten, weist die Bandschlaufe ein elektrostatisches Niederhaltegitter auf, das in der Form eines Musters verflochtener Elektroden in die Bandschlaufe eingebettet ist. Es wird eine elektrische Spannung auf die benachbarten dieser Elektroden aufgebracht, wodurch starke elektrostatische Felder zwischen den Elektroden entstehen. Die Feldlinien erstrecken sich über der Oberfläche des Bandes und wirken mit dem Substrat zusammen, indem sie eine aufnehmende Ladung in dem Substrat erzeugen, was wiederum eine relativ starke elektrostatische Anziehung des Substrats für das Band erzeugt. Diese Kraft, zusammen mit dem Reibungsfaktor, der an der Grenzfläche von Substrat und Band entsteht, verhindert es, daß sich das Substrat relativ zu dem Band verschiebt.

Ein gleiches elektrostatisches Niederhaltegitter kann auf der Bandantriebswalze vorgesehen sein, um Schlupf und Abtreiben des Bandes zu minimieren.

Wie oben erwähnt, ist es beim CAP-Drucken sehr wichtig, die farbigen Bildpunkte an den verschiedenen Druckstationen passergenau übereinanderzulagern. Aus diesem Grund werden bandförmige Träger im allgemeinen nicht für den Transport des Drucksubstrats durch die Druckmaschine verwendet, da das Band die Neigung hat, seitlich abzudriften und sich die Geschwindigkeit des Bandes aus dem einen oder anderen Grund verändern kann. Jedoch das vorliegende Positioniersystem unter Anwendung des bandförmigen Trägers vermeidet diese Probleme dadurch, daß in dem Band mit Hilfe der o. g. Elektroden ein Bündel feiner, in der Länge parallel angeordneter Linien gebildet werden, die sich um die ganze Bandschlaufe, vorzugsweise nahe an deren Kante erstrecken. Diese Linien werden durch einen optischen Sensor, in dessen Arbeitsfläche ein Linienmuster eingraviert ist, abgetastet. Dieses Linienmuster bildet mit den Linien auf dem Band einen Störschutzfilter, der die geringsten seitlichen Bewegungen des Bandes detektieren kann und ein die seitliche Abweichung des Bandes darstellendes Outputsignal erzeugt. Ebenso in das Band eingebettet ist eine in der Länge sich erstreckende Serie von Zeittaktmarkierungen, die eine sich um die gesamte Bandschlaufe erstreckende optische Taktspur bilden. Diese Markierungen werden durch einen zweiten optischen Sensor detektiert, der ein die Bandgeschwindigkeit darstellendes Outputsignal erzeugt. Mit diesen Merkmalen ist es möglich, die Position des Bandes zu jedem Zeitpunkt genau zu bestimmen, auch bei variierender Transportgeschwiwndigkeit, und somit eine erforderliche Aktion an einer bestimmten Position des Bandes einzuleiten.

Diese beiden Signale werden einer Kontrolleinrichtung zugeleitet, welche daraufhin mittels einer einzigartigen, noch zu beschreibenden variablen Geometriewalze erstens die seitliche Position des Bandes einigermaßen steuert und zweitens die lateralen und Längspositionen der Arbeitsteile an den verschiedenen Arbeitsstationen sehr genau einstellt, so daß alle Arbeitsteile genau an der korrekten Stelle auf dem von dem Band transportierten Substrat arbeiten.

Mit anderen Worten, durch das System gemäß vorliegender Erfindung wird für das Substrat bei Ankunft an den aufeinanderfolgenden Arbeitsstationen ein akkurates, passergenaues Positionieren erhalten, während das Substrat elektrostatisch fest auf seinem Platz auf dem Band oder einem anderen Träger gehalten wird. Zu diesem Zweck bleibt das System den Bewegungen des Bandes oder eines anderen Trägers auf der Spur und leitet Signale an die verschiedenen Arbeitsstationen, so daß das Arbeitsteil an jeder Arbeitsstation sich genau an der korrekten Stelle relativ zu dem Substrat befindet, wenn dieses an der jeweiligen Arbeitsstation ankommt. Somit ermöglicht dieses System ein "vorherbestimmbares Positionieren" und das präzise Zusammentreffen der Substratposition mit der Position des Arbeitsteils bei einer Genauigkeitstoleranz von weniger als ± 5 μm.

Wenn die Bandversion des erfindungsgemäßen Transportsystems in eine Mehrfarbendruckmaschine integriert ist, kann die Abweichung des seitwärts triftenden Bandes bestimmt werden, da dem Steuermechanismus, der das Band während dessen Fortbewegung kontinuierlich ausrichtet, eine gewisse Periodizität anhaftet. Demgemäß wird die Position des Schreibkopfes an jeder Druckstation, während dieser mit einem Druckzylinder an dieser Station zusammenwirkt, in Erwartung der Ankunft eines gedruckten Bildpunktes von der vorangehenden Station laufend eingestellt, so daß der nächste Bildpunkt von dem vorherigen Bildpunkt immer präzise überlagert wird. Im wesentlichen sind die Druckköpfe an den verschiedenen Druckstationen der Druckmaschine in kontinuierlicher mikroskopischer Bewegung, wobei diese sich beim Schreiben von Druckbildern auf die jeweiligen Druckzylinder an diesen Stationen entsprechend den durch den Systemregler ausgeführten Berechnungen seitlich bewegen. In die Berechnungen des Systemreglers sind auch die Daten der Bandbewegung und deren Regulierperiodizität mit der des erforderlichen Zeittakts und der Position der aufeinanderfolgenden Druckköpfe integriert. Mit diesem Verfahren der bestimmbaren Passersteuerung ist es möglich, bei klassischen Druckprozessen mit einer nie zuvor erzielten Genauigkeit der Farbüberlagerung zu drucken, wobei bisher Passergenauigkeiten mit einer Toleranz nicht besser als ± 100 μm erzielt wurden.

Somit sind in diesem digitalen Positioniersystem die Druckköpfe an den Druckstationen gegenüber dem oberen oder unteren Abschnitt des Bandes bewegbar gelagert und, von elektrischen Signalen von der Kontrolleinrichtung des Systems gesteuert, folgen sie den sich auf dem Band fortbewegenden Papierbögen, um sich im voraus über dem Ankunftspunkt eines Bildpunktortes auf den Papierbögen zu positionieren, so daß sie genau an diesem Ort drucken können. Diese voraussehende oder bestimmende Bewegung eines jeden Schreibkopfes wird erzielt mit dem Abtasten der Fortbewegung des Bandes durch eine Taktspur auf dem Band, deren Abstand (pitch) eine Unterteilung der Bildpunktfrequenz ist; gleichzeitig wird die seitliche Richtung und der Fortbewegungswinkel (die Schieflage) des Bandes abgetastet, um eine seitliche Verschiebung eines jeden Schreibkopfes einzuleiten, so daß dieser dem Verlauf der Bildpunktposition entgegensieht, während das Drucksubstrat durch das Band zur Druckstation gegenüber dem aktivierten Schreibkopf transportiert wird.

Da die Druckzylinder eine runde Konfiguration haben und der Schreibkopf sich gewöhnlich über dem Zylinder befindet, muß ein gewisser umfänglicher Abstand überwunden werden zwischen dem Moment des digitalen Schreibens eines Bildpunktes auf den Druckzylinder und der Ankunft dieser Position an der Stelle darunter, wo der Bildpunkt auf das Papier auf dem Band übertragen wird. Um diesem Genauigkeitserfordernis gerecht zu werden, sind die Druckzylinder mit einem Winkelkodierer ausgestattet, der bis zu 84.000 Teilungen pro Umdrehung ausführen kann. Somit sind mittels der Bandtaktspur und den bekannten Daten der Bewegungsabstände sowie den Daten des für das Drucken auf das Papier zu überquerenden Teilumfangs des Druckzylinders die aufeinander einwirkenden Positionen der verschiedenen Elemente vorbestimmbar und für jede folgende Druckstation errechenbar, was das genaue Überlagern von aufeinanderfolgenden Farbschichten an den bedruckbaren Bildpunktstellen auf dem Papier ermöglicht.

Zum besseren Verständnis des Wesens und der Aufgaben der Erfindung folgt eine ausführliche Beschreibung im Zusammenhang mit den beigefügten, hierunter erläuterten Zeichnungen.

Es zeigen:

Fig. 1      eine isometrische Ansicht einer Mehrfarbendruckmaschine, worin ein Positioniersystem gemäß vorliegender Erfindung integriert ist;

Fig. 2      eine fragmentarische Draufsicht eines größeren Maßstabs des Trägerbandes in dem System gemäß Fig. 1;

Fig. 3      eine fragmentarische Teilansicht einer variablen geometrischen Führungswalze für das System gemäß Fig. 1;

Fig. 3A      eine Teilansicht entlang der Linie 3A-3A der Fig. 3;

Fig. 4      eine diagrammatische Ansicht eines bandförmigen Positioniersystems für zweiseitiges Drucken;

Fig. 5      eine Ansicht eines hin- und herbewegbaren Positioniersystems, worin die vorliegende Erfindung integriert ist; und

Fig. 6      eine Draufsicht eines weiteren Ausführungsbeispiels eines Trägers für das erfindungsgemäße Positioniersystem.

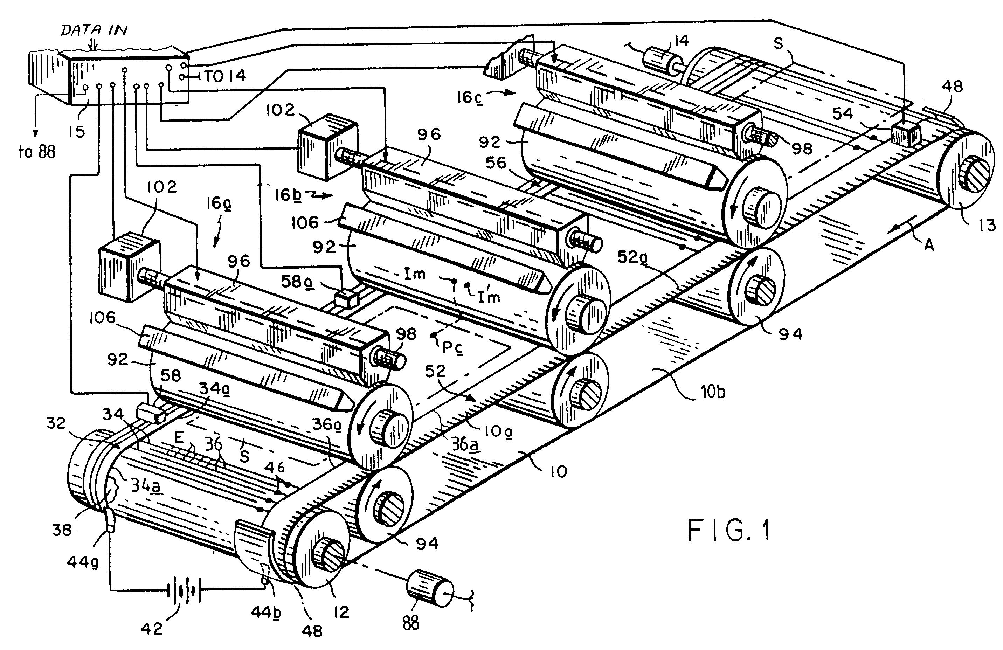

Fig. 1 zeigt das in eine Dreifarben-Druckmaschine integrierte digitale Positioniersystem. Sicherlich ist das im wesentlichen gleiche System auch verwendbar für eine Vierfarben- oder Fünffarben-Druckmaschine geeignet, oder auch für andere Anwendungen, wobei flache Substrate zu aufeinanderfolgenden Arbeitsstationen bewegt werden müssen, an welchen verschiedene positionskritische Operationen auf dem Substrat auszuführen sind.

Das System umfaßt eine aus einem Stück bestehende oder endlose, formgegossene Bandschlaufe 10, die aus einem geeigneten starken, elastischen, reißfesten Material, wie Polyester und Acrylharzderivaten, hergestellt ist. Das Band 10 wird zwischen einem Paar Walzen 12 und 13 gespannt, wovon eine der Walzen, nämlich die Walze 13, durch einen geeigneten Motor 14, welcher von einer einen digitalen Speicher umfassenden Kontrolleinrichtung 15 gesteuert ist, rotiert wird. Entlang der Bandschlaufe 10 befinden sich voneinander beabstandete Druckstationen 16a, 16b und 16c von gleicher Konfiguration, welche in drei verschiedenen Farben auf Substrate S, wie Papierbögen, die auf dem oberen Abschnitt 10a der Bandschlaufe 10 aufliegen, drucken können. Die Druckstationen 16a bis 16c könnten z.B. jeweils die subtraktiven Farben Cyan, Magenta und Gelb drucken.

Beim Betrieb der Druckmaschine wird die Bandschlaufe 10 im Uhrzeigersinn rotiert, wie durch den Pfeil A in Fig. 1 angedeutet. Die Substrate S werden durch einen nicht gezeigten geeigneten Anleger nacheinander auf den oberen Abschnitt 10a der Bandschlaufe 10 abgelegt. Es sind geeignete optische Sensoren (nicht gezeigt) vorgesehen, welche die Positionen der Vorderkante und einer seitlichen Kante eines jeden, auf dem Band 10 abgelegten Substrats S detektieren. Die Positionssignale von diesen Sensoren werden an die Kontrolleinrichtung 15 weitergeleitet, um Deckungsgleichheit der gedruckten Punkte zu erzielen, wie hierunter beschrieben. Während jedes Substrat S auf der Bandschlaufe 10 durch die aufeinanderfolgenden Druckstationen 16a bis 16c transportiert wird, werden Bilder in verschiedenen Farben auf das Substrat gedruckt. Wie oben erwähnt, sind es bei der dargestellten Vorrichtung die Farben Cyan, Magenta und Gelb. Eigentlich stellen diese drei Druckbilder die drei Farbkomponenten oder Auszüge eines Originalfarbdokumentes oder -bildes dar, und für das CAP-Drucken ist es äußerst wichtig, daß die Druckbilder mit großer Passergenauigkeit auf jedes Substrat S gedruckt werden. Das vorliegende System gewährleistet dies erstens dadurch, daß jedes Substrat während seines Transports durch die aufeinanderfolgenden Druckstationen 16a bis 16c fest auf der Bandschlaufe 10 gehalten wird, und zweitens durch die an jeder Druckstation ausgeführte Steuerung der Druckoperation, um jeglichem Abweichen oder irgendwelchen Geschwindigkeitsschwankungen der Bandschlaufe 10 Rechnung zu tragen.

Die erste Aufgabe wird dadurch gelöst, daß die Bandschlaufe 10 ein elektrostatisches Niederhaltegitter 32 umfaßt, welches jedes Substrat S erfaßt, sobald dieses auf dem linken Ende der Bandschlaufe abgelegt ist, und das Substrat während des Transports durch die Druckmaschine flach auf dem Band hält und es freigibt, wenn dieses den Ausgang oder das rechte Ende der Bandschlaufe erreicht hat.

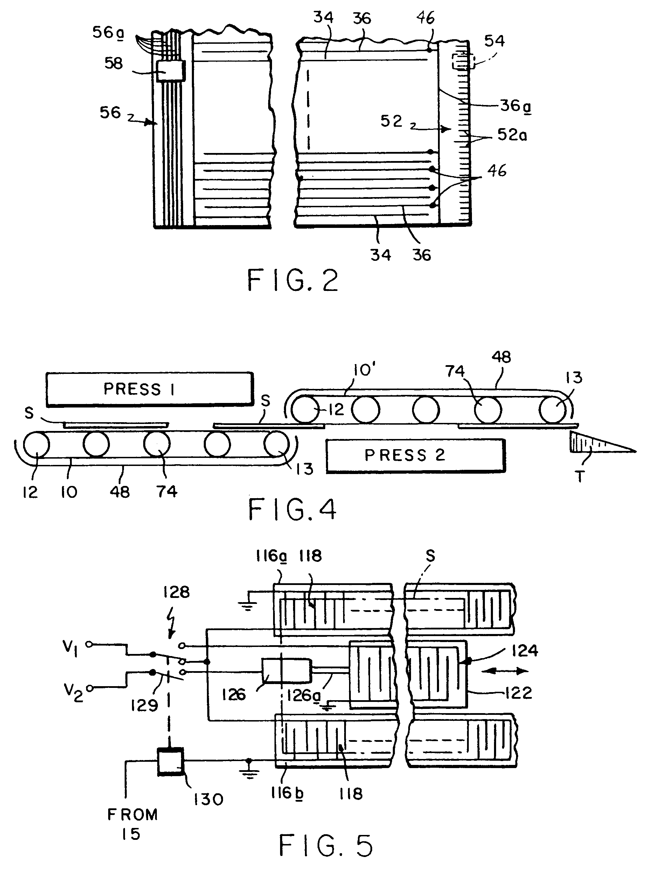

Wie in den Fig. 1 und 2 deutlich ersichtlich ist, umfaßt das Niederhaltegitter 32 eine Reihe beabstandeter, eingeschichteter, streifenartiger Elektroden 34 und 36, die sich quer über die Bandschlaufe 10 erstrecken, während sich die Elektrodenreihe um die gesamte Bandschlaufe 10 erstreckt. Die entsprechenden Enden der Elektroden 34 sind mit einer gemeinsamen Elektrode oder einem Sammelleiter 34a verbunden, welcher sich um die gesamte Bandschlaufe an deren rechter Kante erstreckt. Eine gleiche gemeinsame Elektrode oder ein Sammelleiter 36a verbindet die Elektroden 36 an der rechten Kante der Bandschleife. Die Elektroden und Sammelleiter können von Silber und in herkömmlicher Weise auf die Bandschlaufe aufgedruckt oder platiert sein.

Vorzugsweise befinden sich die Elektroden unter einem Film 38 mit einem relativ hohen Reibungsfaktor, hergestellt z.B. aus Silikonkautschuk, welcher mindestens auf der Außenfläche der Bandschlaufe 10 angebracht ist. Dieser ziemlich dünne Film 38, z.B. 50 µm, verbessert nicht nur die Haltewirkung der Bandschlaufe 10 auf das Substrat S, sondern schützt auch die Elektroden vor chemisch bedingter Erosion oder den Effekten von Kondensation, die unter gewissen Betriebsbedingungen auftreten können. Der Film 38 isoliert auch die Elektroden und verhindert direkten manuellen Kontakt mit diesen.

Während des Betriebs der Vorrichtung liefert eine Stromquelle 42 eine Spannung von ca. 1000 Volt an die Sammelleiter 34a und 36a, welche nicht von dem Film 38 bedeckt sind. Die Stromquelle kann durch Bürsten 44a und 44b mit diesen Sammelleitern 34a und 36a verbunden sein, wie in Fig. 1 gezeigt, oder durch in Rollkontakt mit den Sammelleitern 34a und 36a stehende leitende Rädchen. Diese Verbindungen können auch durch "kapazitives Koppeln" hergestellt werden, wobei Ladungen in das Niederhaltegitter induziert werden, und zwar durch die Verschiebung von Elektronen und elektronenfreien Stellen (Löchern) mittels Kondensatorplatten (nicht gezeigt), die sich in nächster Nähe des Gitters an einer geeigneten Stelle, z.B. am Ende der Bandschlaufe, wo diese sich um die Walze 12 oder 13 dreht, befinden.

Wenn die Elektroden 34 und 36 erregt sind, erzeugen sie starke elektrostatische Felder entlang ihrer gesamten Länge. Die Feldlinien E reichen über die Oberfläche des Films 38 hinaus und wirken auf das auf der Bandschlaufe 10 abgelegte Substrat S ein, indem sie eine kapazitive Ladung in das Substrat induzieren. Dies bewirkt wiederum eine starke elektrostatische Anziehung des Substrats zu dem Band. Diese Anziehung ist jedoch nur in geringen Abständen von dem Band wirksam, wie in der Dicke des Substrats, und ist nur wirksam, wenn sich das Substrat im intimen, ebenen Kontakt mit dem Band befindet.

Somit fixiert das mit dem Film 38 mit hohem Reibungsfaktor verbundene elektrostatische Niederhaltegitter 32 die auf der Bandschlaufe 10 abgelegten Substrate fest in deren Positionen. Außerdem ist die elektrostatische Niederhalteeigenschaft über die gesamte Fläche des Substrats wirksam.

Im folgenden wird die Größe der Anziehungskraft, mit welcher ein Substrat S auf der Bandschlaufenoberfläche gehalten wird, betrachtet.

Angenommen, die Elektroden 34 und 36 haben eine Breite a, und der Film 38 hat eine Dicke b und eine relative Dielektrizitätskonstante $\varepsilon_r$. Wenn ein Substrat S, z.B. ein Papierbogen, auf der Bandschlaufe 10 abgelegt wird und eine Spannung der Größe V zwischen den aneinanderliegenden Elektroden 34 und 36 angebracht wird, erfährt der Papierbogen eine Anziehungskraft. Wegen des Reibungungseffects kann das Papier nicht mehr leicht relativ zur Oberfläche der Bandschlaufe bewegt werden. Die Kraft, welche nötig ist, das Papier parallel zur Oberfläche zu bewegen, ist gleich der Anziehungskraft, multipliziert mit dem zwischen dem Papierbogen und der Bandoberfläche bestehenden Reibungsfaktor. Der Reibungsfaktor ist gewöhnlich eine Zahl weniger als eins; jedoch es können etwas höhere Zahlen leicht erreicht werden. Durch entsprechende Gestaltung kann die Anziehungskraft maximiert werden.

In dem unwahrscheinlichen Fall, daß der Papierbogen total isolierend ist, ist der einzige, für die Anziehung des Papiers zu der Bandoberfläche verantwortliche Effekt der bekannte Anziehungsmechanismus, wobei in einem Gefälle des elektrischen Feldes ein polarisierbares Medium in Richtung der Bereiche mit größerem Feld angezogen wird. Es wird durch das Feld in dem Papier ein Dipolmoment erstellt.

Demzufolge erscheinen gebundene Ladungen auf der Unterseite und Oberseite des Papiers. Wenn das Feld an der Unterseite stärker ist als an der Oberseite des Papiers, dann werden die Ladungen auf die Unterseite stärker angezogen als die Ladungen auf die Oberseite abgestoßen werden. Somit wirkt eine resultierende Kraft auf das Papier.

Eine stärkere Anziehung ergibt sich, wenn das Papier leicht leitend ist, was in der Praxis ständig der Fall ist. Eine elektrisch positiv vorgespannte Metallstreifen-Elektrode 36 induziert eine negative Ladung in das Papier, während die angrenzende negative Metallstreifen-Elektrode 34 eine gleichstarke positive Ladung in das Papier induziert. Da diese beiden Ladungen gleich sind, braucht das Papier nicht geerdet zu werden; das Papier wird durch eine resultierende Ladung weder aufgeladen noch entladen werden. Jedoch kann angenommen werden, daß das Papier auf dem Erdpotential, d. h. halbwege zwischen den positiv und negativ aufgeladenen Elektroden des Bandes verbleibt.

Im folgenden wird die Kapazität zwischen einer Elektrode und dem Papier errechnet. Dieses Problem wurde durch eine zutreffende komplexe Umsetzung (P. N. Wolfe, Proc. IRE, Oktober 1962, Seiten 2130-2133) gelöst. Im Falle von a<<b ist das Ergebnis folgendes:

$$C = \varepsilon_o \varepsilon_r \frac{a + 0.88b}{b} L \qquad (1)$$

In der Gleichung 1 ist L die Länge des Metallstreifens, $\varepsilon_o$ und $\varepsilon_r$ sind die dielektrischen Konstanten des Freiraums und die relative dielektrische Konstante des Films 38. Der Zusatz .88b in der Gleichung 1 stellt den kapazitiven Randeffekt der Elektrode dar. Bei einer großen Breite a kann der Randeffekt außer Acht gelassen werden. Wenn in einer Flächeneinheit sich N Elektroden befinden, muß die obige Aussage mit N multipliziert werden, um die Kapazität pro Flächeneinheit zu erhalten. Somit ergibt die in dem Kondensator gespeicherte Energie die folgende Gleichung:

$$w = \frac{1}{2} CV^2 = \frac{\varepsilon_o \varepsilon_r}{2} V^2 \left(\frac{a}{b} + 0.88\right) NL \qquad (2)$$

Die Kraft, mit welcher das Papier an die Metallelektroden angezogen wird, kann wie folgt errechnet werden. Wenn das Papier einen kleinen Abstand über das Band gehoben wird, dann wird gegen die elektrischen Kräfte gearbeitet. Das Ausmaß dieser benötigten Arbeitsenergie ist gleich der Änderung in elektrischer Energie. Dies wird mit der folgenden Gleichung ausgedrückt:

$$FORCE = -\frac{\partial w}{\partial b} = \frac{\varepsilon_o \varepsilon_r}{2} \frac{V^2}{b^2} NaL \qquad (3)$$

In der obigen Gleichung 3 ist NaL einfach die anteilige Fläche der Bandschlaufe 10, die mit Metall bedeckt ist. Wenn also Elektroden von halber Breite die gleiche Kraft ergeben würden, dann wäre die Kraft unabhängig von der Anzahl der Elektroden. Dieser Schluß wäre nur dann nicht zutreffend, wenn die Papierleitfähigkeit so gering wäre, daß ein äquipotentieller Zustand nicht über die gesamte Papierfläche erstellt werden kann. Bei extrem niedriger Papierleitfähigkeit werden eine größere Anzahl von Elektroden und schmälere als die Elektroden 34, 36 bevorzugt. In der Gleichung 3 wird die Kraft in Einheiten von joule/cm ausgedrückt, wenn Volt und cm angewandt würden und wenn die dielektrische Konstante $\varepsilon_o$ als 8.85E10$^{-14}$ amp sec/()volt cm) gegeben wäre. Um Kraft in Gramm umzuwandeln, kann die in joule/cm gegebene Zahl durch Multiplikation mit 10$^7$ erst in Dyn umgewandelt werden, und in einem zweiten Schritt können die Dyn-Einheiten durch Teilung mit der Schwerkraftbeschleunigung, i.e. 981 cm/sec$^2$ in Gramm umgewandelt werden.

Obschon die oben beschriebene Kraft das Substrat S fest auf der Bandschlaufe 10 hält, sollte beachtet werden, daß das Substrat leicht von dem Band 10 entfernt werden kann, da die Papierhaltekraft an der Trennlinie zwischen Papier und Bandschlaufe gering ist, denn die Breite dieser Trennlinie ist geringer als die Flächeneinheit. Demgemäß ist es offensichtlich, daß ein Substrat S am Ende der Bandschlaufe 10 in einer Richtung, die tangential zur Walze 13 verläuft, leicht entfernt werden kann. In den meisten Fällen genügt es daher, wenn das Substrat S die Steifigkeit eines normalen Papierbogens besitzt, so daß dieses nicht um die Bandwalze 13 gewunden wird, sondern von dem Ausgangsende der Bandschlaufe 10 geradeaus weggestoßen wird, wie in Fig. 1 gezeigt. Um dem nötigen Reibungsfaktor, d. h. der Hafteigenschaft zu genügen, kann der Film 38 gewählt werden.

Beim Positionieren sehr dünner und schwacher Substrate S sollte Vorkehrung für das Abschalten des elektrostatischen Niederhaltegitters 32 an einer gewünschten Zone oder Stelle entlang dem Lauf des Bandes getroffen werden, oder sichergestellt werden, daß die Substrate aufgenommen und an den sich gegenüberliegenden Enden der Bandschlaufe 10 aus dem Transport ausgestoßen werden. Mit anderen Worten, ein dünnes oder schwaches Substrat hat keine innewohnende Steifigkeit. Deshalb könnte es zusammen mit dem Band um die Walze 13 getragen werden und sich möglicherweise in eine unerwünschte Position unter der Bandschlaufe bewegen. Um das Trennen des Substrats S von der Bandschlaufe zu unterstützen, sollte das Niederhaltegitter 32 durch Abschalten der entsprechenden Elektroden 34 und/oder 36 unwirksam gemacht werden. Bei der in Fig. 1 gezeigten Vorrichtung wird dies erzielt, indem jede Elektrode 36 mittels eines kleinen fotoelektrischen Widerstandskörpers 46 mit ihrem Sammelleiter 36a verbunden wird. Der Widerstand des Widerstandskörpers 46 ist umgekehrt proportional zu der Intensität des Lichteinfalls auf den Widerstandskörper 46. In Abwesenheit von Licht trennt somit im wesentlichen jeder Widerstandskörper 46 seine Elektrode 36 vom Sammelleiter 36a.

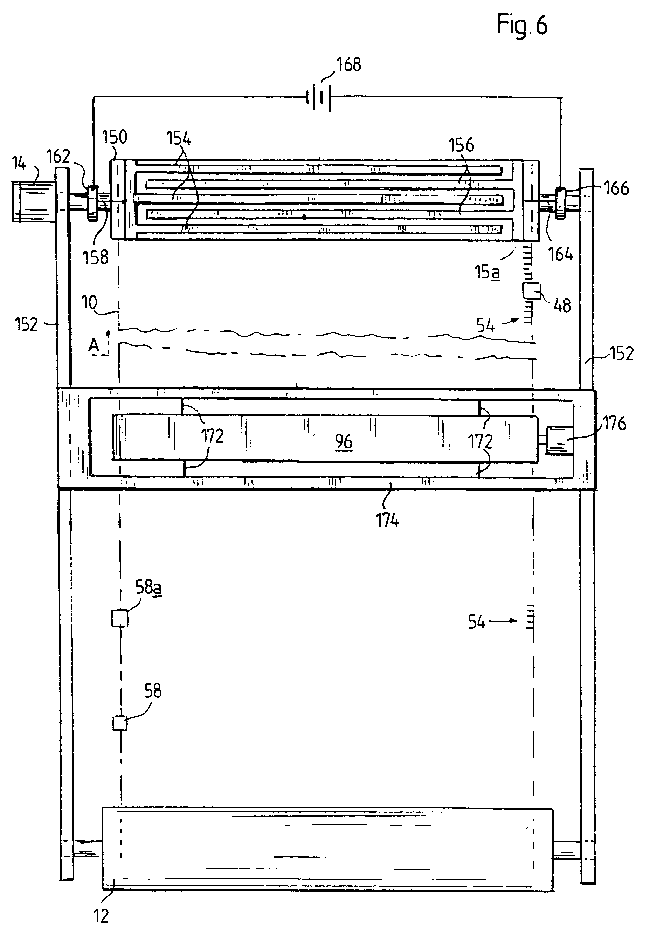

Das dargestellte elektrostatische Niederhaltegitter 32 wird an einer gewählten Stelle oder Zone entlang dem Bandlauf unwirksam gemacht, indem der fotoelektrische Widerstandskörpers 46 an dieser Stelle vor Licht geschützt wird. Zum Beispiel kann ein Lichtschirm 48 unterhalb und um die Enden des Bandlaufs angebracht werden (wie in den Fig. 1 und 4 gezeigt), um das Gitter unter dem Bandabschnitt 10a unwirksam zu machen; dies ermöglicht es, daß das Substrat S von der Bandschlaufe 10 aufgenommen und freigegeben wird.

Während das System der vorliegenden Erfindung die Position der Substrate S auf der Bandschlaufe 10 sicher bestimmt, steuert es auch präzise die seitliche Position des Bandes und das Drucken der Bilder auf die Substrate und kompensiert alle nachwirkenden Bewegungen der Bandschlaufe, welche die Passerhaltigkeit der durch die Druckstationen 16a bis 16c auf die Substrate zu druckenden Bilder verhindern könnten. Zu diesem Zweck ist in die Bandschlaufe 10 eine Taktspur 52 integriert, die aus einer Reihe von entlang der Bandschlaufe in einem Abstand voneinander, vorzugsweise an einer Bandschlaufenkante angebrachten opaken Zeit- oder Taktmarkierungen 52a besteht. Die Taktspur 52 kann gleichzeitig mit dem Gitter 32 auf die Bandschlaufe aufgebracht werden. Diese Taktspuren oder -linien werden durch einen optischen Detektor 54 erfaßt, welcher entsprechende Outputsignale erzeugt und diese an die Kontrolleinrichtung 15 sendet. Somit bilden die Taktspur 52 und der Detektor 54 den Taktgeber für das System als Ganzes.

Außer der Taktspur 52 ist auch eine Bandpositionsspur 56 in die Bandschlaufe 10 integriert, vorzugsweise an einer von deren Kanten. Diese Spur 56 besteht aus einem Bündel schmaler, voneinander beabstandeter, paralleler, opaker Linien 56a, die sich um die gesamte Bandschlaufe 10 erstrecken. In dem dargestellten System sind fünf solcher Linien 56a in der Spur 56 ersichtlich. Diese Linien werden durch einen, an dem Maschinenrahmen unmittelbar unterhalb der Walze 12 angebrachten Meßdetektor 58 abgetastet. Der Detektor 58 kann von gitterförmiger Struktur sein, ähnlich dem in dem US-Patent Nr. 3,584,015 beschriebenen Detektor. Der Inhalt dieses Patents ist hier durch Bezugnahme integriert. Der Detektor 58 empfängt ein dem Muster der Spur 56 entsprechendes Bild und hat auch deshalb die Struktur eines Gitters. Mittels geeigneter Aufnahmeelemente erzeugt die Position des gitterförmigen Bildes der Spur 56 relativ zu dem gitterförmigen Detektor 58 ein Signal von dem Detektor 58, das die seitliche Position des Bandes relativ zu einer Bezugsposition, wie die Maschinenmittellinie, andeutet. Der Detektor-Output hat eine Genauigkeit mit einer Toleranz von weniger als 1 $\mu$m. Das von dem Detektor 58 kommende Signal wird an die Kontrolleinrichtung 15 geleitet und wird nicht nur zur Minimierung der seitlichen Abweichungen des Bandes, sondern auch zur Steuerung des Druckens auf das Substrat S durch die Druckstationen 16a bis 16c verwendet, so daß diese Stationen mit exakter Passergenauigkeit auf die Substrate S drucken, welche, wie oben erwähnt, elektrostatisch auf dem Bandschlaufenabschnitt 10a haften.

Zum Halten des Bandes in seiner lateralen Position umfaßt das System gemäß vorliegender Erfindung eine einzigartige Walze 12, die an ihrem einen Ende im Durchmesser zunehmen und an ihrem anderen Ende im Durchmesser abnehmen kann, oder umgekehrt, um das Band 10 lateral zu verschieben. Das System ermöglicht eine minimale konische Verformung der Walze 12, was eine sofortige laterale Verschiebung des Bandes 10 bewirkt, während sich dieses um den halben Umfang der Walze 12 dreht. das laterale Triften des Bandes wird kontinuierlich überwacht und ein Servoregelsystem reguliert den Grad der konischen Verformung der Walze 12, um das Band in der gewünschten Position zu halten, d. h. in der Maschinenmittellinie.

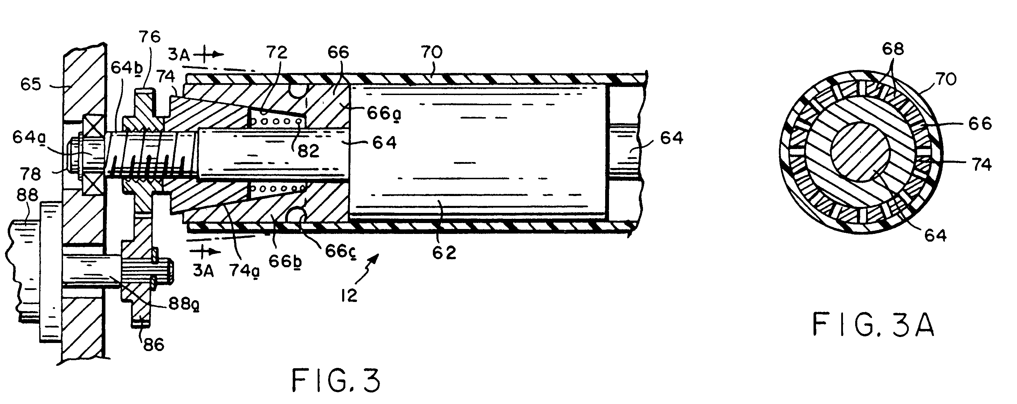

Es wird nun auf die Fig. 3 und 3A hingewiesen, worin die Walze 12 im einzelnen dargestellt ist. Fig. 3 zeigt nur das Segment am linken Ende der Walze, da das Segment am rechten Ende der Walze ein Spiegelbild des linken Segments ist. Die Walze 12 umfaßt einen zylindrischen mittleren Körper 62 mit Wellen 64, die axial aus den gegenüberliegenden Enden des Körpers 62 herausragen. Ein einen verminderten Durchmesser aufweisendes Ende 64a einer jeden Welle 64 ist in dem Maschinenrahmen 65 gelagert. Ein sich innerhalb des Maschinenrahmens befindliches Wellensegment 64b weist auch ein Gewinde auf. Auf jeder Welle 64 ist ein ringförmiges Walzenendteil 66 verschiebbar angebracht. Jedes Endteil 66 hat einen Sockel 66a, welcher auf der zugehörigen Welle 64 verschiebbar aufgenommen ist und an dem angrenzenden Ende des Körpers 62 anliegt. Von dem Sockel 66a erstreckt sich axial ein ringförmiger zylindrischer Abschnitt 66b mit einem eingeschnürten Segment 66c an dem Sockel 66a. Wie am deutlichsten in Fig. 3A ersichtlich, ist der Abschnitt 66b der Länge nach geschlitzt, um eine Vielzahl von Fingern 68 zu bilden, die sich unabhängig voneinander radial um eine Achse an dem Segment 66c biegen können. Jedes Endteil 66 hat den gleichen Durchmesser wie der Walzenkörper 62 und bildet somit eine Walzenkörperverlängerung mit variablem Durchmesser. Der Walzenkörper 62 und die Endteile 66 sind mit einer Hülse 70 aus nachgiebigem Material, z.B. Gummi, bedeckt.

Wie in Fig. 3 gezeigt, ist die Innenwand 72 des Abschnitts 66b des Endteils 66 verjüngt, so daß sich eine konische Oberfläche bildet, deren Radius sich mit deren Abstand von dem Ende der Walze 12 vermindert. Auf jeder Welle 64 ist für den Kontakt mit der Oberfläche 72 ein ringförmiger Keil 74 verschiebbar angebracht, welcher eine konusförmige Außenfläche 74a aufweist, deren Konuswinkel mit dem der Oberfläche 72 übereinstimmt. Es ist auch ein Stirnzahnrad 76 mit einer mit einem Gewinde versehenen axialen Öffnung 78 auf jedes Wellensegment 64b zwischen dem Keil 74 und dem Maschinenrahmen 65 aufgeschraubt. Wenn nun ein Stirnzahnrad 76 in die eine Richtung rotiert wird, so schiebt es den zugehörigen Keil 74 weiter in das angrenzende Ende der Walze 12. Diese Betätigung bewirkt, daß sich der zugehörige Endteil-Abschnitt 66b radial ausdehnt und somit den Durchmesser der Walze 12 an deren zugehörigem Ende vergrößert. Wenn andererseits das Stirnzahnrad 76 in die entgegengesetzte Richtung rotiert wird, so übt es keine Kraft auf seinen Keil 74 aus, so daß dieser daraufhin nach außen in Richtung des zugehörigen Endes der Walze 12 geschoben wird, und zwar durch das Zusammenpressen einer sich zwischen jedem Keil 74 und dem zugehörigen Sockel 66a des Walzenendteils 66 befindlichen Spiralfeder 82. Dadurch wird der Durchmesser dieses Endes der Walze 12 vermindert.

Jedes Stirnzahnrad 76 kann auf seiner Welle 64 durch ein Gegenrad 86 in die eine oder andere Richtung rotiert werden, wobei das Gegenrad 86 mit der Welle 88a eines impulsartig angetriebenen, in dem Maschinenrahmen 65 gelagerten umsteuerbaren Servomotors 88 rotiert. Jeder Motor 88 kann sein Stirnzahnrad 76 schneller oder langsamer rotieren lassen als die Walze 12, welche den zugehörigen Keil 74 nach innen oder nach außen bewegen wird, um die konische Form des zugehörigen Endes der Walze 12 zu regulieren.

Es sollte bedacht werden, daß der Endteil-Abschnitt 66b so auf seinem Sockel 66a geformt und positioniert ist, daß beim Zurückziehen des zugehörigen Keils 64 nach außen die nachgiebige Walzenhülse 70 schrumpfen wird, so daß das zugehörige Ende der Walze 12 einen kleineren Durchmesser haben kann als das mittlere Teil 62 der Walze 12. Somit können bei entsprechender Positionierung der Keile 74 auf den Wellen 64 die Segmente an den gegenüberliegenden Enden der Walze jeweils so gesteuert werden, daß deren Durchmesser kleiner, gleich groß, oder größer als der Durchmesser des mittleren Teils 62 der Walze 12 ist. Mit anderen Worten, durch entsprechendes Positionieren der Keile 74 an den gegenüberliegenden Enden der Walze 12 kann die konische Form der Walze 12 als ganzes in der einen oder anderen axialen Richtung variiert werden.

In dem dargestellten System werden die Motoren 88, welche die konische Form der Walze 12 regulieren, durch eine Standard-Regelschaltung in der Kontrolleinrichtung 15 gesteuert (Fig. 1), und zwar in Entsprechung eines Outputsignals von dem Detektor 58, welcher das laterale Triften des Bandabschnitts 10a überwacht. Die Regelschaltung hält das Band in einer gewählten lateralen Position, d. h. in der Maschinenmittellinie, mit sehr kleinen Toleranzen. Sobald eine seitliche Verschiebung des Bandes durch den Detektor 58 ermittelt ist, wird ein Signal an die Kontrolleinrichtung 15 geleitet, welche einen oder beide Motoren 88 steuert, um die Keile 74 nach innen oder außen zu gewegen und die konische Form der Walze 12 genau um das Maß zu verändern, welches für das Zurückbringen des Bandes in seine Mittelposition erforderlich ist.

Nachdem die Bewegung des Bandes 10 zur Minimierung einer Seitwärtsbewegung desselben präzise gesteuert werden kann, wie soeben beschrieben, sieht das vorliegende System auch vor, alle übrigen Bewegungen dieses Bandes, welche infolge von Bandunregelmäßigkeiten oder kleinen Verzögerungen oder Störungen in der Bandpositionsregelschaltung auftreten können, zu kompensieren.

Wie oben erwähnt, sind alle Druckstationen 16a bis 16c gleich, außer daß sie mit unterschiedlichen Farben drucken, z. B. mit den subtraktiven Farben Cyan, Magenta und Gelb. Jede Druckstation umfaßt einen über dem Bandabschnitt 10a angebrachten Druckzylinder 92 und einen sich parallel zu dem Druckzylinder 92 und unterhalb dem Bandabschnitt 10a befindlichen Amboßzylinder 94. Alle Zylinder 92, 94 sind in dem Maschinenrahmen rotierbar und parallel zu den Bandwalzen 12 und 14 gelagert, und zwar so, daß der obere Abschnitt 10a der Bandschlaufe 10 an jeder Druckstation in Rollkontakt mit dem Zylinderpaar 92, 94 steht.

Jede Druckstation umfaßt auch einen Schreibkopf 96, der sehr nahe an der Mantelfläche des Zylinders 92 auf einer Schraubenspindel 98 angebracht ist, die in dem Maschinenrahmen rotierbar und sich parallel zu den Zylindern 92, 94 erstreckend gelagert ist. Die Schraubenspindel 98 kann durch einen umsteuerbaren Schrittmotor 102, der von der Kontrolleinrichtung 15 Antriebssignale empfängt, in die eine oder andere Richtung rotiert werden.

Der Schreibkopf 96, der Druckzylinder 92 und die Kontrolleinrichtung 15 können des Typs sein, welche den Mikrotunnel-Druckelementen dienen, die in dem US-Patent Nr. 5,325,129 beschrieben sind. Der Inhalt des genannten Dokuments ist durch Bezugnahme hier integriert.

Während des Betriebs der Vorrichtung schreiben die Druckköpfe 96 elektronische Bilder entsprechend den Primärfarbkomponenten oder Farbauszügen eines Originaldokuments oder -bildes auf die zugeordneten Druckzylinder 92, wobei die Bilder während der Rotation der Druckzylinder 92 Zone um Zone geschrieben werden. Das auf jeden Druckzylinder 92 geschriebene Bild wird entwickelt, indem elektrostatische thermoplastische Farbe von einer Farbquelle 106 an einer Farbstation auf die Druckzylinderoberfläche aufgetragen wird. Wie in dem genannten Patent und der Parallelanmeldung beschrieben, haftet die Farbe nur auf den Oberflächenbereichen des Zylinders 92, die durch den Schreibkopf 96 aufgeladen wurden. Wenn die eingefärbten Teile des rotierenden Zylinders 92 auf das durch die entsprechende Farbstation passierende Substrat S treffen, wird die Farbe auf dieses Substrat übertragen. Wie bei den meisten Druckmaschinen wird die Position des auf jeden Druckzylinder 92 geschriebenen Bildes mit der Position des Substrats S auf dem Substratträger so koordiniert, daß das auf das Substrat gedruckte Bild sich in der korrekten Position auf dem Substrat befindet.

Es ergeht ein Drucksignal, wenn die Papierdetektoren ein Signal erzeugen, welches der Kontrolleinrichtung 15 andeutet, daß ein Substrat S auf der Bandschlaufe 10 abgelegt wurde und sich in Richtung der ersten Druckstation 16a bewegt. Dieses Drucksignal veranlaßt den Speicher in der Kontrolleinrichtung 15, einen Datenstrom freizugeben an die Mikrotunnel-Schreibelemente der Druckköpfe 96 an den Druckstationen 16a bis 16c, wo die Signale für jeden Bildpunkt zu dem genauen Zeitpunkt, der für den zu erwartenden Zyklus der Bildpunktwanderung verlangt ist, d. h. für die auf die korrekten Stellen auf dem Druckzylinder 92 zu druckenden Bildpunkte ankommen müssen.

Ein typischer Schreibkopf 96 kann ungefähr 1 Meter lang sein und bis zu 20.000 Schreibelemente enthalten, wobei jedes Element seinen Steuerimpuls von dem digitalen Speicher erhält. Somit wird der Speicher einem Schreibelement befehlen, welche Farbdichte es auf der Oberfläche des operativen Druckzylinders 92 anbringen soll, und wiederum befehlen, wieviel Farbe aus der Farbquelle 106 aufgenommen werden soll, während der Druckzylinderumfang sich an die Linie des Kontakts mit dem Substrats S fortbewegt.

Es wird hier nochmals Bezug genommen auf Fig. 1. Wenn ein elektronischer Schreibkopf 96 verwendet wird, wie diejenigen, welche in dem oben erwähnten Patent beschrieben sind, ist der Schreibkopf stets stationär. Gemäß vorliegender Erfindung ist jedoch der Schreibkopf auf der Schraubenspindel 98 lateral bewegbar, um jeglichem nachwirkenden lateralen Triften der Bandschlaufe 10, das bei verfrühter oder verzögerter Steuerung der Bandposition durch die Servoschaltung auftreten kann, zu begegnen. Es wird also besonders das Outputsignal von dem Detektor 58 zusammen mit dem Signal von einem zweiten, ähnlichen Detektor 58a, welche beide die Bandposition überwachen, dazu verwendet, jeden Schreibkopf 96 zu verschieben, um solches Triften zu kompensieren. Wenn die Bandschlaufe 10 von einer gewählten Bezugsposition, z.B. der Maschinenmittellinie, abweicht, errechnet die Kontrolleinrichtung 15, welche die Outputsignale von den Detektoren 58 und 58a empfängt, die Vektorbewegung des Bandes 10 in Transportrichtung und gibt entsprechende Antriebssignale an die Schrittmotoren 102, welche die Schraubenspindeln 98 rotieren. Durch die Umdrehungen der Schraubenspindeln 98 wird die Position der zugehörigen Druckköpfe 96 seitlich verschoben, so daß die elektronischen Bildpunkte, die auf die Druckzylinder 92 geschrieben werden, erneut seitlich positioniert werden, um das Triften des Bandes auszugleichen. Zur gleichen Zeit wird der Zeittakt reguliert, in welchem die Druckköpfe 96 die Bildpunkte auf die Zylinder 92 schreiben, um eventuelle, von dem Taktspurdetektor 54 erfaßte Geschwindigkeitsschwankungen der Bandschlaufe 10 auszugleichen.

Während des Betriebs der Vorrichtung werden die Substrate S nacheinander auf den oberen Bandabschnitt 10a am Beginn der Bandschlaufe 10 abgelegt, auf welchem sie fest haften. Dafür sorgen der auf das Band aufgebrachte Film 38 mit hohem Reibungsfaktor und das elektrostatische Niederhaltegitter 32. Die Kontrolleinrichtung 15 koordiniert das Zuführen eines jeden Substrats S auf die Bandschlaufe 10 mit den an den Druckstationen 16a bis 16c ausgeführten Druckoperationen, so daß die Bilder auf dem Substrat S akkurat zentriert sind. Wenn sich das Substrat S der ersten Druckstation 16a nähert, steuert die Kontrolleinrichtung 15 den Schreibkopf 96 an der Station 16a so, daß dieser ein elektronisches Bild auf den Druckzylinder 92 an dieser Station schreibt, das dann an der Cyan-Farbquelle 106 eingefärbt wird, und wenn das Substrat S die Druckstation 16a erreicht hat, wird das eingefärbte Bild auf das Substrat S übertragen, während es an dieser Station zwischen den Zylindern 92 und 94 passiert. Während dieser Zeit empfängt die Kontrolleinrichtung 15 Signale von den Detektoren 54, 58 und 58a, welche die Längsposition und die laterale Position des Bandabschnitts 10a andeuten. Diese Information verwendet die Kontrolleinrichtung 15 und bestimmt, ob das Bild, das auf den Druckzylinder 92 geschrieben wird, axial oder umfänglich auf dem Zylinder verschoben werden muß, um Änderungen in der Bandposition oder der Bandgeschwindigkeit auszugleichen. Wenn das Band seitlich getriftet ist, dann errechnet die Steuereinrichtung 15 das Maß der Abweichung und die Längsposition des Bandes und sendet ein Antriebssignal an den Schrittmotor 102 zum Verschieben des Schreibkopfes 96 in die eine oder andere Richtung, um die Abweichung auszugleichen.

Ähnlich wird verfahren, wenn eine Bahngeschwindigkeitsänderung detektiert wurde. Dann steuert die Kontrolleinrichtung 19 den Zeittakt der von dem Schreibkopf 96 ausgeführten Schreiboperation und reguliert dabei die umfänglichen Positionen der Bildpunkte auf dem Druckzylinder 92, um die Bandgeschwindigkeitsänderungen auszugleichen. Somit wird beim Passieren des Substrats S durch die erste Druckstation 16a ein Cyan-Bild an der richtigen Stelle auf dem Substrat gedruckt, ungeachtet der unerwünschten Bandbewegungen in der Zeit zwischen der Ablage des Substrats S auf das Band und seiner Bearbeitung durch die Druckstation 16a.

Beim Transport des Substrats von der Druckstation 16a zur Druckstation 16b fährt das System in gleicher Weise fort, die Bandbewegungen zu überwachen und die Position und/oder den Zeittakt des Schreibkopfes 96 an dieser Station 16b zu regulieren, so daß zu dem Zeitpunkt, wenn ein bestimmter gedruckter Bildpunkt auf dem Substrat die Druckstation 16b erreicht, der Schreibkopf 96 an dieser Station positionsmäßig und zeittaktmäßig schon reguliert worden ist, so daß der Schreibkopf den entsprechenden Magenta-Bildpunkt an die richtige Stelle auf dem Druckzylinder 72 an Station 16b schreibt und dieser Magenta-Bildpunkt den cyanfarbigen gedruckten Bildpunkt auf dem Substrat S überlagert, sobald der cyanfarbige Bildpunkt an der Druckstation 16b angekommen ist.

Das Maß des Triftens des sich fortbewegenden Bandes kann wegen der Periodizität der Steuerung, die dem Servosystem innewohnt, im voraus bestimmt werden. Das Servo-System reguliert das Band während seines Laufs kontinuierlich. Dementsprechend kann jeder in Verbindung mit dem zugehörigen Druckzylinder 92 arbeitende Schreibkopf 96 in Erwartung der Ankunft eines gedruckten Bildpunktes kontinuierlich reguliert werden, so daß der nächste Bildpunkt den vorangehenden Bildpunkt immer exact überlagern wird. Die Kontrolleinrichtung 15 errechnet die Geschwindigkeit des Bandes 10, die Bewegungsstrecke eines jeden gedruckten Bildpunktes und die Position des Bildpunktes, welcher augenblicklich auf den Druckzylinder geschrieben wird, so daß beide gleichzeitig an der korrekten Stelle auf dem Substrat S konvergieren können. Mit anderen Worten, die Druckköpfe sind in kontinuierlicher mikroskopischer Bewegung und wandern seitlich, während sie ihre Signale entsprechend den Berechnungen von der Steuereinrichtung 15 auf die zugehörigen Druckzylinder aufbringen.

Wenn z.B. der Bandabschnitt 10a nach links triften sollte, während dieser das Substrat S von der Druckstation 16a zur Druckstation 16b transportiert, würde dieses Triften durch den Detektor 58 ermittelt und an die Kontrolleinrichtung 15 weitergeleitet werden. Die Steuereinrichtung 15, welche die Position des Bandabschnitts 10a von den durch die Detektoren 54, 58 und 58a erzeugten Signalen her kennt, wird den Wert errechnen, um welchen der Schreibkopf 96 an der Druckstation 16b nach links bewegt werden muß, um einen entsprechenden Magenta-Bildpunkt $I_m$ auf den Zylinder 92 zu schreiben, der auf den an der Station 16a auf das Substrat gedruckten Bildpunkt $P_c$ aufgesetzt werden muß. Mit anderen Worten, ohne diese Korrektur würde die Druckstation 16b einen Bildpunkt $I'_m$ auf den Zylinder 92 schreiben, der rechts von dem gedruckten Bildpunkt $P_c$ auf das Substrat S gedruckt werden würde. Jedoch gemäß dieser Erfindung wird der Schreibkopf 96 um den gleichen Wert als der Triftwert des Bandes nach links bewegt, so daß der Bildpunkt $I_m$, welcher mit dem gedruckten Bildpunkt $P_c$ korrespondiert, auf letzteren aufgesetzt wird.

Dieser Prozess setzt sich mit dem Transport des Substrats S durch die aufeinanderfolgenden Druckstationen der Druckmaschine fort, so daß das Substrat beim Verlassen der Druckmaschine einen Dreifarbendruck mit allen gedruckten Bildpunkten in passergenauer Übereinstimmung trägt.

Bei der Anwendung des Prinzips der "vorherbestimmbaren Positionierung" überschreitet das System gemäß vorliegender Erfindung im Bereich des Farbdrucks bei weitem die derzeit erzielbare Passergenauigkeit des Drucks, wobei bezeichnenderweise noch eine Toleranz von $\pm$ 100 $\mu$m gilt.

Die oben beschriebene Bandtransporteinrichtung kann auch für zweiseitiges Bedrucken eines Substrats eingesetzt werden. Zu diesem Zweck können zwei solcher Transporteinrichtungen hintereinander angeordnet werden, wie in Fig. 4 gezeigt, und zwar in der Weise, daß der obere Abschnitt der einen Bandschlaufe auf der gleichen Ebene liegt wie der untere Abschnitt der anderen Bandschlaufe. Ein auf die Bandschlaufe 10 der linken Transporteinrichtung abgelegtes Substrat S kann durch ein erstes Druckwerk befördert werden, das auf die Oberseite des Substrats druckt, wie oben beschrieben. Am Ende dieser Bandschlaufe 10 wird das Substrat S auf die rechte Transporteinrichtung übertragen, deren Bandschlaufe 10' ein dem Gitter 32 der Fig. 1 und 2 gleiches elektrostatisches Niederhaltegitter trägt. Jedoch wird in dieser letzteren Transporteinrichtung das Gitter in einer Zone auf der Unterseite der Bandschlaufe aktiviert, so daß das Substrat an dem unteren Abschnitt dieser Bandschlaufe aufgehängt ist und so durch ein zweites Druckwerk bewegt wird, das auf die Unterseite des Substrats S druckt. An dem Ausgangsende der rechten Transporteinrichtung wird das Substrat in einem geeigneten, schräggelagerten Behälter T ausgelegt.

Selbstverständlich kann ein schaltbares elektrostatisches Niederhaltegitter auch auf die Außenfläche einer Papiertrommel oder eines Papierzylinders projeziert werden, um ein Substrat auf die Trommel oder den Zylinder in der gleichen Weise aufzunehmen und von diesen zu lösen, wie oben im Zusammenhang mit der Bandschlaufe 10 beschrieben.

Fig. 5 stellt eine hin- und herbewegbare Transporteinrichtung oder eine solche mit bewegbarem oder schwingendem Boden dar, worin das elektrostatische Niederhaltegitter integriert ist. Diese Transporteinrichtung umfaßt ein ein Paar voneinander beabstandeter, parallel angeordneter, stationärer Seitenplatten 116a und 116b, welche elektrostatische Niederhaltegitter 118a und 118b tragen. Zwischen den Seitenplatten 116a und 116b ist eine hin- und herbewegbare Platte 122 angeordnet, die ebenfalls ein elektrostatisches Niederhaltegitter 124 trägt. Die Platte 122 wird durch ein lineares Betätigungsorgan 126, dessen Armatur 126a mit einem Ende der Platte 122 verbunden ist, parallel zu den Platten 116a und 116b hin- und herbewegt. Die stationären Niederhaltegitter 118a und 118b sind elektrisch über einen Anschluß eines Umschalters 128 parallel mit einer Spannungsquelle $V_1$ verbunden. Ein anderer Anschluß des Umschalters 128 verbindet das Gitter 124 auf der bewegbaren Platte 122 mit der gleichen Spannungsquelle. Das Betätigungsorgan 126 ist über einen zweiten Schalter 129 mit einer zweiten Sspannungsquelle $V_2$ verbunden, wobei die Positionen beider Schalter 128 und 129 durch eine Relaisspule 130 gesteuert werden.

Wenn das Betätigungsorgan 126 erregt wird, schiebt seine Armatur die Platte 122 nach rechts, und bei Entregung des Betätigungsorgans spannt eine innere Feder (nicht gezeigt) die Armatur 126a und die Platte 122 vor und bringt diese in eine eingefahrene Ausgangsposition. In Fig. 5 ist ersichtlich, daß bei Erregung des Relais 130 durch ein Steuersignal von der Kontrolleinrichtung 15 (Fig. 1) der Schalter 129 den Stromkreis schließt, wodurch das Betätigungsorgan erregt und dadurch die Platte 122 veranlaßt wird, sich in die ausgefahrene Position nach rechts zu bewegen. Gleichzeitig aktiviert das Relais 130 den Umschalter 128, wodurch das Niederhaltegitter 124 auf der sich bewegenden Platte 122 mit der Spannungsquelle $V_1$ verbunden wird und die Niederhaltegitter 118a und 118b auf den Platten 116a und 116b von dieser Spannungsquelle getrennt werden. Somit haftet ein auf der Transporteinrichtung positioniertes Substrat S auf der sich bewegenden Platte 122 und wird mit dieser fortbewegt.

Wenn andererseits das Relais 130 entregt wird, dann öffnet der Schalter 129 den Stromkreis, wodurch das Betätigungsorgan 126 entregt wird, so daß die Platte 122 sich nach links in ihre eingefahrene oder Ausgangsposition bewegt. Gleichzeitig bewegt das Relais 130 den Umschalter 128 in seine andere Position, wobei das Niederhaltegitter 124 von der Spannungsquelle $V_1$ getrennt und die Niederhaltegitter 118a und 118b mit dieser Spannungsquelle verbunden werden. Während sich also die Platte 122 in ihre eingefahrene Position begibt, wird das Substrat S von dieser freigegeben und haftet dann auf den Platten 116a und 116b, so daß es in seiner fortgeschrittenen Position verbleibt. Folgende Hin- und Herbewegungen der bewegbaren Platte 122, zusammen mit dem um 180° außer-Phase An- und Abschalten der bewegbaren und stationären Niederhaltegitter, bewegen das Substrat S nach rechts fort (siehe Fig. 5). Es ist auch eine hin- und herbewegbare Transporteinrichtung denkbar, die sich über viel geringere Abstände bewegt, wobei zur Bewegung der bewegbaren Teile der Transporteinrichtung piezoelektrische Schwinger oder Biegeelemente verwendet werden.

Fig. 6 zeigt ein Ausführungsbeispiel der Transporteinrichtung für das System, die sich geringfügig von dem im Zusammenhang mit den Fig. 1 und 2 beschriebenen unterscheidet. Die Transporteinrichtung in Fig. 6 hat mehrere Elemente mit der in Fig. 1 gemein, daher werden diese auch mit den gleichen Bezugsziffern gekennzeichnet.

In der Transporteinrichtung der Fig. 6 wird die Bandschlaufe 10 gespannt zwischen einem Paar Walzen 12 und 150, welche im Maschinenrahmen 152 rotierbar gelagert sind, wobei letztere Walze 150 durch einen ebenfalls in dem Maschinenrahmem gelagerten Motor 14 angetrieben wird. Anstatt bei dieser Transporteinrichtung durch entsprechende Maßnahmen das Triften des Bandes 10 auf den Walzen zu kontrollieren, wird hier dieses Triften minimiert oder beseitigt, indem Schlupf des Bandes 10 relativ zu der Walze 150 mit Hilfe einer elektrostatischen Niederhalteanordnung, ähnlich dem oben beschriebenen Gitter für das Substrat S, verhindert wird. Im einzelnen ist die Außenfläche der Walze 150 mit eingeschichteten Streifenelektroden 154 und 156, die sich entlang der Zylinderlänge erstrecken, versehen. Vorzugsweise sind die Elektroden 154 und 156 mit einem Isolierfilm 157 bedeckt. Die jeweiligen Enden der Elektroden 154 sind durch einen umfänglichen Sammelleiter 154a an dem einen Ende der Walze 150 verbunden. Ein gleicher Sammelleiter 156a am anderen Ende der Walze 150 verbindet die jeweiligen Enden der Elektroden 156. Der Sammelleiter 154a ist durch eine Zuleitung 158 mit einem an dem Wellenzapfen des einen Wellenendes angebrachten Schleifring 162 verbunden. Eine gleiche Zuleitung 164 verbindet den Sammelleiter 156a mit einem Schleifring 166 an dem Zapfen des anderen Wellenendes. Die Schleifringe 162, 166 sind elektrisch mit einer Quelle von hoher Spannung in der Form einer Batterie 168 verbunden. Diese Spannungsquelle liefert eine Spannung von ca. 2 bis 3 Kilovolt, so daß sich starke elektrische Felder zwischen den Elektroden 154 und 156 entwickeln, wie oben im Zusammenhang mit den Bandschlaufen-Elektroden beschrieben.

Wenn zwischen den Elektroden 154 und 156 eine hohe Spannung vorhanden ist, entstehen elektrostatische, die den um die Walze 150 gewundenen Abschnitt der Bandschlaufe 10 wirksam auf die Oberfläche der Walze "heften", wobei Schlupf der Bandschlaufe 10 relativ zur Walze 150 minimiert oder verhindert wird. Jedoch ist die Haltekraft an der Scheidelinie des Bandes von der Walze 150 minimal, so daß diese Felder keinen materiellen Effekt auf die Fortbewegung des Bandes 10 haben.

Wie vorher, ist ein Sensor 48 vorgesehen, welcher die Taktspuren auf der Bandschlaufe 10 detektiert. Gleichermaßen sind Detektoren 58 und 58a vorgesehen, welche die laterale Position und die Schräglage der Bandschlaufe überwachen, um ein eventuelles nachwirkendes Triften der Bandschlaufe auf den Walzen 12 und 150 zu ermitteln. Da in diesem Fall das Triften minimal ist, können einfach die Kante der Bandschlaufe 10 oder die laterale Position des Elektroden-Sammelleiters 34a (Fig. 1) auf der Bandschlaufe 10 durch die Detektoren 58 und 58a überwacht werden.

Die Signale von den Detektoren 58 und 58a werden von der Kontrolleinrichtung 15 bearbeitet, die dann Steuersignale erzeugt, durch welche die Druckköpfe 96 in ihrer lateralen Position verschoben werden, so daß die Druckelemente der Druckköpfe 96 auf dem Druckzylinder 92 an den richtigen Bildpunktstellen schreiben, was bewirkt, daß an diesen Stellen ein passergenauer Druck auf das Substrat S erfolgt, wenn dieses die operative Druckstation erreicht hat.

In der Vorrichtung der Fig. 6 ist jeder Schreibkopf 96 mittels Blattfedern 172 auf einem in dem Maschinenrahmen 152 befestigten rechteckigen Träger 174 gelagert. Die Blattfedern 172 sind an der Kante angeordnet und mit den Druckköpfen 96 und dem Träger 174 verbunden, wobei der Schreibkopf nur einen einzigen Grad Spielraum in seitlicher Richtung hat. Der Schreibkopf 96 hat eine normale Ausgangsposition über der Bandschlaufe 10; er kann durch ein piezoelektrisches Betätigungsorgan 176, das an einem Ende des Trägers 174 angebracht ist, bewegt werden. Wenn das Betätigungsorgan 176 durch Steuersignale von der Kontrolleinrichtung 15 erregt wird, so wird der Schreibkopf 96 lateral verschoben, um der Vorspannung der Federn 172 entgegenzuwirken. Um die Druckköpfe 96 im voraus lateral zu verschieben, funktionieren die Betätigungsorgane 176 in der gleichen Weise wie die oben beschriebenen Schraubenspindeln 98. Jedoch die Betätigungsorgane sprechen besser an als die Schraubenspindeln.

Wie aus der obigen Beschreibung hervorgeht, ermöglicht das Transportsystem gemäß vorliegender Erfindung das Steuern und Positionieren von Dokumenten und anderen Gegenständen mit einem hohen Genauigkeitsgrad. Deshalb sollte dieses System vielfältige Anwendung finden, wo immer es erforderlich ist, eine Reihe von Handlungen an bestimmten Stellen auf flachen Gegenständen der einen oder anderen Art auszuführen.

Somit ist zu erkennen, daß die genannten Aufgaben der Erfindung, besonders die in der obigen Beschreibung ausgewiesenen, auf effiziente Weise gelöst worden sind. Da gewisse Änderungen in den oben beschriebenen Konstruktionen erfolgen können, die in den Rahmen der Erfindung fallen, sollte alles in der obigen Beschreibung Enthaltene oder in den beigefügten Zeichnungen Gezeigte als illustrativ und nicht einschränkend betrachtet werden.

Es sollte auch verstanden sein, daß die folgenden Ansprüche alle gattungsbezogenen und spezifischen Merkmale der Erfindung enthalten.

LIST OF REFERENCE NUMERALS

| | |
|---|---|
| 10 | Bandschlaufe |
| 10a | oberer Abschnitt der Bandschlaufe |
| 12 | Walze |
| 13 | Walze |
| 14 | Motor |
| 15 | Kontrolleinrichtung |
| 16a | Druckstation |
| 16b | Druckstation |
| 16c | Druckstation |
| 32 | elektrostatisches Niederhaltegitter |
| 34 | Elektrode |
| 34a | Sammelleiter |
| 36 | Elektrode |
| 36a | Sammelleiter |
| 38 | Film |
| 42 | Stromquelle |
| 44a | Bürste |
| 44b | Bürste |
| 46 | fotoelektrischer Widerstandskörper |
| 48 | Lichtschirm / Sensor |
| 52 | Taktspur |
| 52a | Taktmarkierungen |
| 54 | optischer Detektor |
| 56 | Bandpositionsspur |
| 56a | opake Linien |
| 58 | Meßdetektor |
| 58a | Meßdetektor |
| 62 | mittlerer Körper der Walze 12 |
| 64 | Wellen der Walze 12 |
| 64a | Wellenende |
| 64b | Wellensegment |
| 65 | Maschinenrahmen |
| 66 | ringförmiges Walzenendteil |
| 66a | Sockel des Walzenendteils 66 |
| 66b | ringförmiger zylindrischer Abschnitt |
| 66c | Segment 66c |
| 68 | Finger |
| 70 | Hülse |
| 72 | Innenwand des Abschnitts 66b des Endteils 66 |
| 74 | ringförmiger Keil |
| 74a | konusförmige Außenfläche |
| 76 | Stirnzahnrad |
| 78 | Öffnung des Stirnzahnrads |
| 82 | Spiralfeder |
| 86 | Gegenrad |
| 88 | Servomotor |
| 88a | Welle des Servomotors |
| 92 | Druckzylinder |
| 94 | Amboßzylinder |
| 96 | Schreibkopf |
| 98 | Schraubenspindel |
| 102 | Schrittmotor |
| 106 | Farbquelle |
| 116a | Seitenplatte |
| 116b | Seitenplatte |
| 118a | Niederhaltegitter |
| 118b | Niederhaltegitter |

| | |
|---|---|
| 122 | hin- und herbewegbare Platte |
| 124 | Niederhaltegitter der Platte 122 |
| 126 | Betätigungsorgan |
| 126a | Armatur des Betätigungsorgans 126 |
| 128 | Umschalter |
| 129 | Schalter |
| 130 | Relaisspule |
| 150 | Walze |
| 152 | Maschinenrahmen |
| 154 | Streifenelektroden |
| 154a | Sammelleiter |
| 156 | Streifenelektroden |
| 156a | Sammelleiter |
| 157 | Isolierfilm |
| 158 | Zuleitung |
| 162 | Schleifring |
| 164 | Zuleitung |
| 166 | Schleifring |
| 168 | Batterie |
| 172 | Blattfedern |
| 174 | Träger |
| 176 | piezoelektrisches Betätigungsorgan |
| E | Feldlinien |

**Patentansprüche**

1. Positioniersystem, welches die folgenden Merkmale umfaßt:

einen Maschinenrahmen (152);
ein Paar voneinander beabstandete, eine jeweilige zylindrische Außenfläche aufweisende Walzen (12, 13), die parallel zueinander in dem Maschinenrahmen (152) gelagert sind;
eine um die Walzen (12, 13) gewundene und zwischen diesen gespannte, eine Außenfläche aufweisende
Bandschlaufe (10), die einen oberen Bandabschnitt (10a) und einen unteren Bandabschnitt (10b) umfaßt;
ein Antriebsmittel (14) für das Rotieren mindestens einer der Walzen (12, 13), so daß der obere Bandabschnitt (10a) sich in einer gewählten Längsrichtung bewegt;
ein in die zlindrische Außenfläche der mindestens einen der Walzen (12, 13) integriertes elektrostatisches Niederhaltegitter (32), das erste und zweite Reihen von Elektroden (46, 46) aufweist, und
eine Stromquelle (42) für das Anbringen einer elektrischen Spannung zwischen den ersten und zweiten Elektrodenreihen (34, 36), um von der zylindrischen Außenfläche (12, 13) ausstrahlende elektrostatische Felder zu erzeugen, die stark genug sind, um Schlupf der Bandschlaufe (10) relativ zu der zylindrischen Außenfläche (12, 13) zu unterbinden, wenn die genannte mindestens eine der Walzen (12, 13) rotiert wird.

2. Positioniersystem gemäß Anspruch 1, welches ferner einen auf die zylindrische Außenfläche der mindestens einen der Walzen (12, 13) aufgetragenen Isolierfilm (38) umfaßt, der einen hohen Reibungsfaktor aufweist.

3. Positioniersystem gemäß Anspruch 2,
**dadurch gekennzeichnet,**
daß der Film (38) eine Silikonbeschichtung ist.

4. Positioniersystem gemäß Anspruch 1, welches ferner umfaßt:

ein Überwachungssystem mit einem ersten Detektor (58), welcher die seitliche Position der Bandschlaufe (10) bezüglich einer gewählten Position ermittelt und ein entsprechendes Outputsignal erzeugt;
mit einem Schreibkopf (work head) (96), welcher auf die Oberfläche eines Druckzylinders (92) schreibt;
mit einer Positioniereinrichtung zum beweglichen Positionieren des Schreibkopfes (96) gegenüber der Oberfläche des Druckzylinders (92);
mit einer Bewegungseinrichtung, die auf ein Kopf-Steuersignal zur Bewegung des Schreibkopfes (96) in seitlicher Richtung und rechtwinklig zur gewählten Richtung anspricht; und
mit einer Servoeinrichtung, die auf das genannte Outputsignal zum Erzeugen und Senden eines Kopf-Steuersignals an die genannte Bewegungseinrichtung anspricht, um den Schreibkopf in die genannte seitliche Richtung zu verschieben und somit eine laterale Bewegung der Bandschlaufe (10) weg von der gewählten Position auszugleichen.

5. Transportsystem gemäß Anspruch 4, welches ferner umfaßt:

Taktmarkierungen (52), die entlang der Bandschlaufe (10) angebracht sind;
einen Sensor (54), welcher die Taktmarkierungen (52) abtastet und ein entsprechendes Taktsignal erzeugt; und
eine Kontrolleinrichtung (15), die auf das genannte Taktsignal zur Beschleunigung oder Verzögerung des Schreibens des Schreibkopfes (96) auf einen Zylinder (92) reagiert, um Veränderungen in der Bewegung der Bandschlaufe (10) in die gewählte Richtung auszugleichen.

6. Positioniersystem gemäß Anspruch 5,
**dadurch gekennzeichnet,**
daß das Überwachungssystem einen zweiten Detektor (58a) umfaßt, welcher sich gegenüber der Bandschlaufe (10) in einem Abstand von dem ersten Detektor (58) entlang der Bandschlaufe (10) befindet und die seitliche Position der Bandschlaufe (10) ermittelt und ein entsprechendes zweites Outputsignal erzeugt, und daß die Servoeinrichtung auch auf das genannte zweite Outputsignal anspricht, wobei das Kopf-Steuersignal erzeugt und an die Bewegungseinrichtung gesendet wird, um einen Schräglauf des oberen Bandabschnitts (10a) auszugleichen.

7. Transportsystem gemäß Anspruch 1, welches ferner umfaßt:

> Taktmarkierungen (52), die entlang der Bandschlaufe (10) angebracht sind;
> einen Sensor (54), welcher die Taktmarkierungen (52) abtastet und ein entsprechendes Taktsignal erzeugt; und
> eine Kontrolleinrichtung (15) für das Beschleunigen oder Verzögern des Schreibens des Schreibkopfes (96) auf den Zylinder (92), um Veränderungen in der Bewegung der Bandschlaufe (10) in die gewählte Richtung auszugleichen.

8. Transportsystem gemäß Anspruch 1,
   **dadurch gekennzeichnet**,
   daß das Überwachungssystem Bandpositionsindikatoren (56) auf der Bandschlaufe (10) und ein Paar Detektoren (54, 58), umfaßt, welche gegenüber der Bandschlaufe (10) in einem Abstand voneinander an gewissen Stellen entlang dieser angebracht sind,

> daß die Detektoren (54, 58) die laterale Position der Bandpositionsindikatoren (56) an diesen Stellen ermitteln und das genannte Outputsignal und ein zweites, einen Schräglauf des Bandes andeutendes Outputsignal erzeugen, und daß die genannte Servoeinrichtung auf das genannte Outputsignal und das genannte zweite Outputsignal anspricht, um das Kopf-Steuersignal zu erzeugen und an die genannte Bewegungseinrichtung zu senden.

FIG. 1

FIG. 2

FIG. 4

FIG. 5

FIG. 3

FIG. 3A

EP 0 738 680 A2

Fig. 6